# EUROPÄISCHE PATENTSCHRIFT

(11) **EP 2 905 392 B1**
(45) Veröffentlichungstag und Bekanntmachung des Hinweises auf die Patenterteilung: **28.07.2021**
(21) Anmeldenummer: 15000115.4
(22) Anmeldetag: 16.01.2015
(51) Int. Cl.: E04B 1/76

(54) **SETZVERFAHREN ZUR BEFESTIGUNG VON DÄMMSTOFFEN**
SETTING METHOD FOR FIXING INSULATING MATERIALS
PROCÉDÉ DE POSE POUR LA FIXATION D'ISOLANTS

(30) Priorität: 06.02.2014 DE 102014101496
(43) Veröffentlichungstag der Anmeldung: 12.08.2015
(73) Patentinhaber: fischerwerke GmbH & Co. KG, 72178 Waldachtal (DE)
(72) Erfinder: Renz, Jürgen, 72202 Nagold (DE)

(56) Entgegenhaltungen:
- EP-A2- 1 318 250
- EP-A2- 2 466 025
- WO-A1-2011/012096
- WO-A1-2014/011064
- DE-A1- 4 324 598

## Beschreibung

Die Erfindung betrifft ein Setzverfahren zur Befestigung von Dämmstoffen mit den Merkmalen des Oberbegriffs des Anspruchs 1.

Aus der Druckschrift EP 1 318 250 A2 sind ein Dübel und ein Setzverfahren bekannt, die eine sogenannte "versenkte" Befestigung eines Dämmstoffs an einem Untergrund erlauben. Die Druckschrift schlägt dazu in einer Ausführungsform (Figuren 1 bis 3) vor, einen Dübel mit einem Halteteller vorzusehen, bei dem der Halteteller drehbar gegenüber einer Dübelhülse ist. Nach dem Einstecken des Dübels in ein vorgebohrtes Loch wird zunächst die Schraube und dann Schraube und Halteteller gemeinsam gedreht. Durch die Drehung des Haltetellers schneidet sich dieser in den Dämmstoff ein. Die Schraube zieht im Weiteren den Halteteller in den Dämmstoff ein, wobei dieser komprimiert wird. Der Halteteller ist axialverschieblich und drehbar an der Dübelhülse angebracht, so dass sich Halteteller und Dübelhülse beim Setzen teleskopartig ineinander schieben. Nachteilig ist, dass derartige Dübel ein großes Packmaß aufweisen, also sehr große Kartons oder dergleichen für relativ wenige Dübel benötigt werden. Dies wirkt sich negativ auf die gesamte logistische Kette, also beim Lagern und Transportieren, aus.

Ein weiterer gattungsgemäßer Dämmstoffhalter ist aus der Druckschrift EP 2 466 025 A2 bekannt. Die Druckschrift EP 2 466 025 A2 betrifft einen Dämmstoffhalter zur Befestigung einer Dämmstoffplatte an einem Befestigungsgrund, mit einem Dämmstoffgewinde, das in eine Dämmstoffplatte derart einschraubbar ist, dass das Dämmstoffgewinde in den Dämmstoff einen Gewindegang einschneidet. Das Dämmstoffgewinde ist fest mit einer Schraube verbunden, die in eine Dübelhülse eingetrieben wird, während das Dämmstoffgewinde sich in den Dämmstoff einschneidet. Gleichzeitig wird die Dübelhülse axial gestaucht.

Aufgabe der Erfindung ist es ein verbessertes Setzverfahren zum Befestigen eines Dämmstoffs an einem Untergrund mit einem Dübel vorzuschlagen.

Diese Aufgabe wird erfindungsgemäß durch die Merkmale des Anspruchs 1 gelöst. Ein Dübel zur Befestigung von Dämmstoffen, insbesondere plattenförmigen Dämmstoffen, weist eine Schraube als Spreizelement auf. Als Schraube wird hier auch ein Schraubnagel verstanden. Weiterhin weist der Dübel eine Dübelhülse mit einem Kanal zur Aufnahme der Schraube auf. Die Dübelhülse weist einen Spreizabschnitt und einen Schaftabschnitt auf, wobei der Kanal im Spreizabschnitt derart gegenüber dem Schaftabschnitt verjüngt ist, dass der Spreizabschnitt durch Eintreiben der Schraube aufgespreizt wird, wodurch der Dübel in einem Bohrloch in einem Untergrund verankert werden kann. Der Dübel weist außerdem einen Halteteller auf, der drehbar gegenüber dem Spreizabschnitt ist.

Der Halteteller ist axialfest und drehbar mit der Dübelhülse verbunden. "Axialfest" meint, dass insbesondere beim Setzen des Dübels keine Relativbewegung zwischen Halteteller und Dübelhülse vorgesehen ist. "Drehbar" meint, dass der Halteteller um eine Drehachse, die im Wesentlichen der Längsachse der Dübelhülse entspricht, relativ zur Dübelhülse drehbar ist. Halteteller und Dübelhülse bilden ein Drehlager. Dieses Drehlager muss nicht leichtgängig sein, auch kann ein Anfangswiderstand zu überwinden sein.

Um trotz der Axialfestigkeit beim Versenken des Dübels eine Relativbewegung zwischen Spreizabschnitt und Halteteller zu gewährleisten, weist die Dübelhülse im Schaftabschnitt eine Verkürzungszone auf. Diese Verkürzungszone ist durch Anziehen der Schraube beim Verankern des Dübels im Untergrund verkürzbar, und zwar plastisch stauchbar. Durch die Verkürzungszone im Schaftabschnitt braucht sich der Dübel nicht teleskopartig verkürzen, wie dies beim Stand der Technik der Fall ist. Hierdurch kann beim Halteteller auf einen längeren hülsenförmigen Fortsatz zur Bildung einer teleskopartigen Schiebeführung mit der Dübelhülse verzichtet werden. Der Halteteller kann somit flach ausgebildet sein, was nicht ausschließt, dass der Halteteller dennoch einen kurzen Fortsatz aufweist. Dessen Länge ist aber unabhängig vom Weg beim Versenken frei wählbar, wobei mit dem "Weg" hier die Relativbewegung von Halteteller zu Spreizabschnitt gemeint ist. Werden Dübelhülse und Halteteller in nicht vormontierter Form verpackt, ist ein sehr kompaktes Packmaß erreichbar. Der Dübel kann dann beispielsweise auf der Baustelle durch Fügen von Halteteller und Dübelhülse fertig montiert werden. Das Fügen kann beispielsweise durch ein Aufschieben des Haltetellers auf die Dübelhülse und Verrasten dieser Teile erfolgen.

Zum erfindungsgemäßen Befestigen eines Dämmstoffs an einem Untergrund wird ein Dübel mit einer Schraube als Spreizelement, einer Dübelhülse und einem Halteteller, insbesondere wie bereits beschrieben, verwendet. Die Schraube wird von einem Setzwerkzeug drehend in die Dübelhülse eingetrieben. Dabei wird in einem ersten Schritt nur die Schraube gedreht. Nachdem ein Teil des Eintreibwegs zurückgelegt ist, wird in einem zweiten Schritt die Schraube und der Halteteller gemeinsam gedreht.

Erfindungsgemäß wir die Dübelhülse beim Eintreiben der Schraube axial verkürzt, und zwar plastisch gestaucht.

Die Verkürzung findet erfindungsgemäß im Wesentlichen nur in der Verkürzungszone statt, und diese bildet nur einen Teil des Schaftabschnitts. Dies ermöglicht, dass der Schaftabschnitt ansonsten steif ausgebildet ist und der Dübel somit gut handhabbar und in ein Bohrloch einschiebbar ist.

Vorzugsweise weist der Schaftabschnitt zur Ausbildung der Verkürzungszone eine oder mehrere lokale Schwächung auf. Wird eine axiale Kraft durch das Einschrauben der Schraube auf die Dübelhülse ausgeübt, bilden sich im Bereich der lokalen Schwächung Spannungsspitzen, so dass eine Verformung in diesem Bereich provoziert wird.

Die Schwächung des Abschnitts kann so weit gehen, dass eine oder mehrere Öffnungen angeordnet sind oder derartige Öffnungen zumindest durch die Verformungen beim Verkürzen entstehen. Um die Gefahr eindringenden Wassers, verbunden mit Korrosion der Schraube, so gering wie möglich zu halten, schlägt die Erfindung vor, dass die Verkürzungszone in einem an den Spreizabschnitt angrenzenden Bereich des Schaftabschnitts, und somit im Einbauzustand des Dübels fern der Außenseite der jeweiligen Wand, angeordnet ist.

Vorzugsweise erstreckt sich die Dübelhülse über die gesamte Länge des Dübels. Dies ermöglicht, dass der Halteteller sehr flach ausgebildet werden kann. Dabei ist mit der Länge des Dübels hier die Länge ohne Schraube gemeint, da die Länge mit Schraube je nach Zustand (vor oder nach dem Setzen) variiert.

Da beim Setzen des Dübels sowohl die Verkürzungszone als auch der Dämmstoff gestaucht werden müssen, treten erhebliche Axialkräfte innerhalb des Dübels auf. Um die resultierenden Drehmomente in der Schraube nicht zu hoch werden zu lassen, schlägt die Erfindung eine Schraube geringer Steigung vor, worunter hier eine Schraube mit einem Verhältnis von Gewindesteigung zu Gewindeaußendurchmesser von maximal 0,4, insbesondere maximal 0,3, verstanden wird. Das Verhältnis ist dabei im mittleren Bereich des Gewindes zu bestimmen.

Die Erfindung wird nachfolgend anhand eines Ausführungsbeispiels erläutert.

Es zeigen:
- Figur 1: einen Dübel in einer perspektivischen Schnittdarstellung;
- Figuren 2a - 2c: das erfindungsgemäße Setzverfahren für diesen Dübel in drei Schnittdarstellungen; und
- Figur 3: eine Detail-Schnittdarstellung, die den Eingriff des Setzwerkzeugs in den Halteteller des Dübels zeigt.

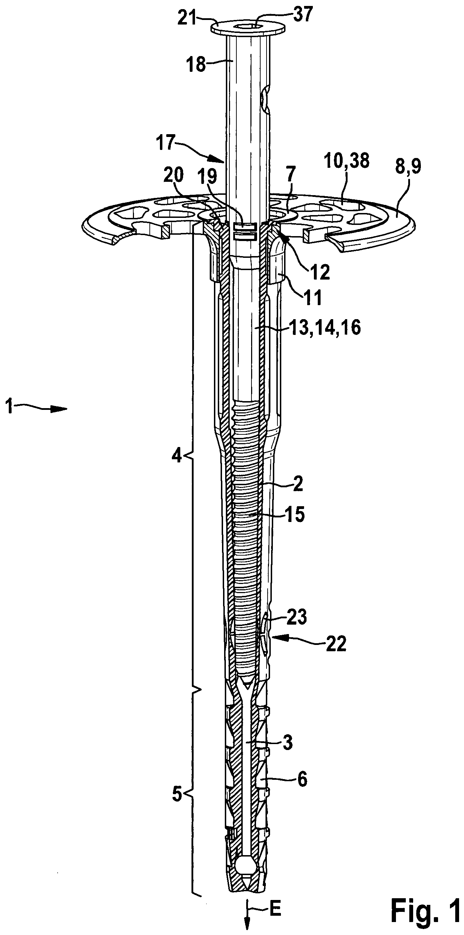

Der in Figur 1 dargestellte Dübel 1 weist eine lang gestreckte Dübelhülse 2 mit einem sich entlang der Längsachse erstreckenden Kanal 3 auf. Vorne weist die Dübelhülse 2 einen Spreizabschnitt 4 auf, an den sich ein Schaftabschnitt 5 anschließt. "Vorne" und "hinten" beziehen sich stets auf die Einbringrichtung E des Dübels beim Setzen. Der Übergang vom Schaftabschnitt 5 zum Spreizabschnitt 4 ist durch eine signifikante Verengung des Kanals 3 auf etwa die Hälfte des Durchmessers gekennzeichnet, während der Außendurchmesser im Wesentlichen nur sehr leicht konisch nach hinten erweitert. Im hinteren Viertel ist der Schaftabschnitt 4 nochmals um etwa 20 Prozent im Außendurchmesser erweitert. Der Spreizabschnitt 5 weist Kerben 6 derart auf, dass die Außenseite des Spreizabschnitts 5 eine widerhakenartige Struktur aufweist. Am hinteren Ende der Dübelhülse 2 erweitert sich der Schaftabschnitt 4 zu einem ersten Kragen 7 und es ist ein Halteteller 8 in diesem Bereich angeordnet. Der Halteteller 8 ist im Wesentlichen eine flache, kreisrunde Scheibe 9 mit mehreren, über den Umfang verteilten Ausnehmungen 10, sowie einen nach vorne ragenden, kurzen hülsenartigen Fortsatz 11 zur drehbaren Lagerung des Haltetellers 8 auf der Dübelhülse 2. Gegen eine Verschiebung nach hinten wird der Halteteller 8 vom ersten Kragen 7 gehalten, während er gegenüber einer Verschiebung nach vorne, die für das Setzen und den Einbauzustand nicht relevant ist, lediglich durch eine Rastverbindung 12 in Form einer umlaufenden Nut und eines umlaufenden Wulsts (nicht dargestellt) gehalten wird. Durch den Halt gegen Verschieben nach hinten ist der Halteteller 8 axialfest mit der Dübelhülse 2 verbunden. Die Ausgestaltung der Verbindung als Rastverbindung 12 erlaubt, dass der Halteteller 8 gesondert von der Dübelhülse 2 bis zu einer Baustelle transportiert, dann erst vom Bediener von vorne her auf die Dübelhülse 2 geschoben und in der dargestellten Position verrastet wird. Hierdurch kann der Dübel 1 sehr platzsparend transportiert werden. Ganz unabhängig von den sonstigen Merkmalen des Ausführungsbeispiels kann die Rastverbindung 12 lösbar oder unlösbar gestaltet sein oder durch eine andere Art der Verbindung ersetzt sein.

Axial mittig liegt in der Dübelhülse 2 eine Schraube 13 als Spreizelement ein, wobei Figur 1 den Zustand vor dem Setzen darstellt, bei dem das hintere Ende der Schraube 13 aus der Dübelhülse 2 herausschaut. Ohne die Schraube 13 ist der Dübel 1 so lang wie die Dübelhülse 2. Das vordere Ende der Schraube 13 wird von einem Metallstift 14 gebildet, der ein Gewinde 15 aufweist, dessen Länge etwa dem 1,5-fachen der Länge des Spreizabschnitts 5 der Dübelhülse 2 entspricht. Das Verhältnis der Gewindesteigung zum Gewindeaußendurchmesser liegt über den wesentlichen Teil der Länge bei 0,25, es handelt sich also um eine Schraube 13 geringer Steigung. An das Gewinde 15 schließt sich zunächst ein gewindeloser Abschnitt 16 und dann ein Kopfabschnitt 17 mit Rändel (nicht dargestellt) an. Der Kopfabschnitt 17 ist umspritzt mit Kunststoff, wodurch ein langgestreckter, im Wesentlichen zylindrischer Kopf 18 der Schraube 13 gebildet ist. Die Länge des Kopfes 18 entspricht im Wesentlichen der Länge des Spreizabschnitts 5. Im vorderen Bereich weist der Kopf 18 mehrere umlaufende erste Wülste 19 auf, die in Verbindung mit einem radial nach innen stehenden, umlaufenden zweiten Wulst 20 am hinteren Ende der Dübelhülse 2 dafür sorgen, dass die Schraube 13 in der dargestellten Position gegenüber der Dübelhülse 2 für das Setzen gehalten wird. Am hinteren Ende weist die Schraube 13 einen zweiten Kragen 21 auf, der beim Eintreiben der Schraube 13 in die Dübelhülse 2 im Bereich des ersten Kragens 7 der Dübelhülse 2 axial zum Anschlag kommt. Bei diesem Eintreiben gelangt die Schraube 13 mit ihrem Gewinde 15 in den Spreizabschnitt 5 der Dübelhülse 2. Damit sie dort greifen und zu einer Verspreizung führen kann, ist der Kanal 3 gegenüber dem Schaftabschnitt 4 deutlich verengt. Wie im Weiteren noch näher erläutert wird, ist der Eintreibvorgang der Schraube 13 in die Dübelhülse 2 nicht mit dem axialen Anschlagen des zweiten Kragens 21 an der Dübelhülse 2 beendet, sondern es soll eine Verkürzung der Dübelhülse 2 erfolgen. Hierzu weist die Dübelhülse 2 im vorderen, unmittelbar an den Spreizabschnitt 4 anschließenden Teil des Schaftabschnitts 5 eine Verkürzungszone 22 auf. Diese Verkürzungszone 22 wird durch mehrere lokale Schwächungen 23 gebildet, die die Dübelhülse 2 teilweise vollständig durchdringen, teilweise aber auch nur taschenartig ausgebildet sind. Dabei kommt es nicht darauf an, ob das Durchdringen teilweise oder vollständig erfolgt. Wichtig ist, dass die Dübelhülse 2 beim Transport und beim Einführen in ein Bohrloch in diesem Bereich nicht wesentlich deformiert wird, aber beim Eintreiben der Schraube 13 mittels eines möglichst geringen Drehmoments verkürzbar ist, wobei die Verkürzung im Ausführungsbeispiel durch eine plastische Stauchung erfolgt.

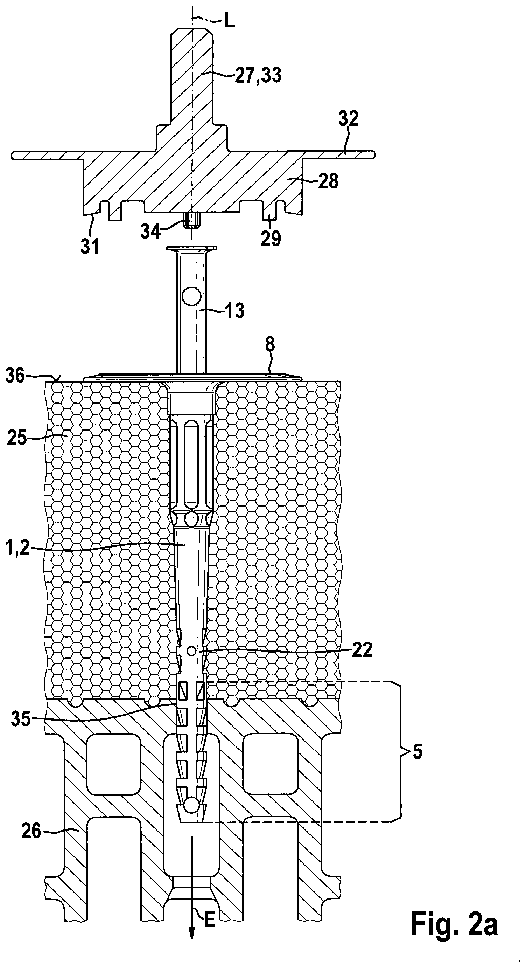

Anhand der Figuren 2a - 2c wird im Folgenden das erfindungsgemäße Setzverfahren erläutert. Dieses Setzverfahren dient der Erstellung einer Befestigungsanordnung 24 mit einem plattenförmigen Dämmstoff 25, der mittels des Dübels 1 an einem Untergrund 26, hier ein Mauerwerk aus Hochlochziegeln, befestigt ist. Das Setzen erfolgt mittels eines Setzwerkzeugs 27, das beispielsweise in eine Bohrmaschine oder einen Akkuschrauber (nicht dargestellt) eingespannt werden kann.

Das Setzwerkzeug 27 weist einen zylindrischen Grundkörper 28 auf, von dem an einer dem Dübel 1 zugewandten, vorderen Seite mehrere axial nach vorne ragende, längliche zylindrische Zapfen 29 als Vorsprünge 30 angeordnet sind. Insgesamt sind sieben Zapfen 29 über den Umfang verteilt auf einer gedachten Kreislinie angeordnet. Außerdem ragt vom Grundkörper 28 entlang des Umfangs ein umlaufender Rand 31 nach vorne, wobei der Rand 31 nicht ganz so weit nach vorne ragt wie die Zapfen 29. An der gegenüberliegenden, hinteren Seite des Grundkörpers 28 wird dieser von einem Anschlagsteller 32 in radialer Richtung überragt. In axialer Richtung schließt sich mittig an den Grundkörper 28 nach hinten ein sechskantiger Schaft 33 zur Aufnahme des Setzwerkzeugs 27 in einer Bohrmaschine oder dgl. an. Mittig nach vorne überragt den Grundkörper 28 in axialer Richtung außerdem ein sternförmiges Schraubbit 34.

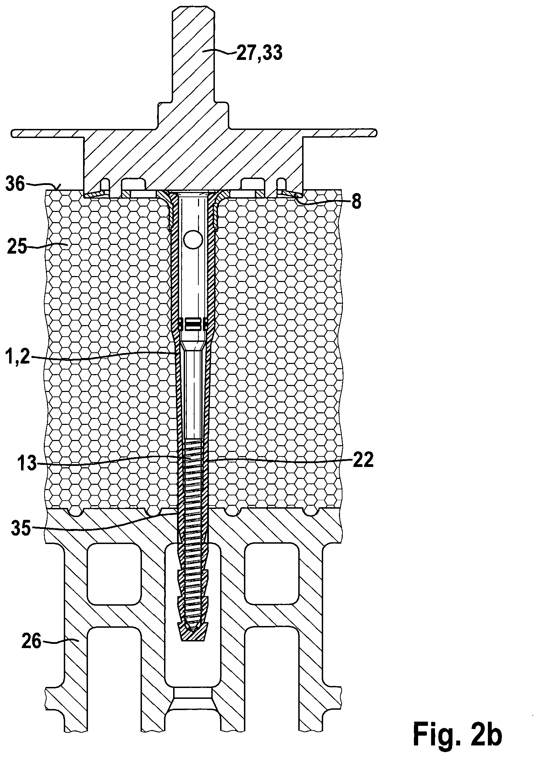

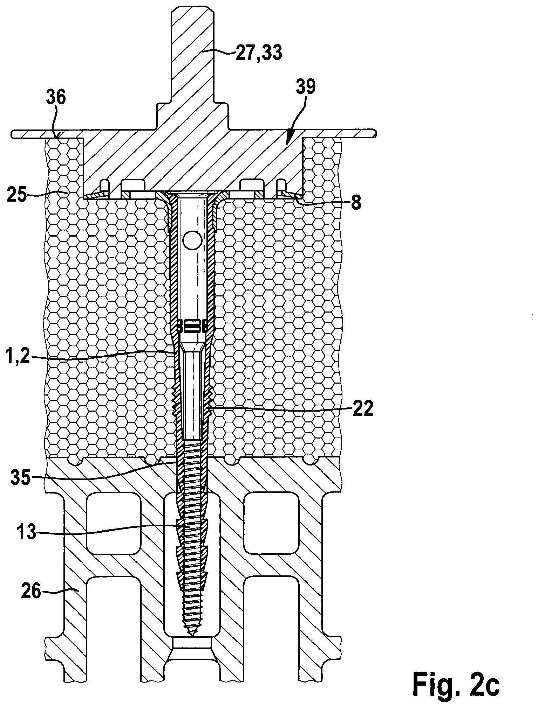

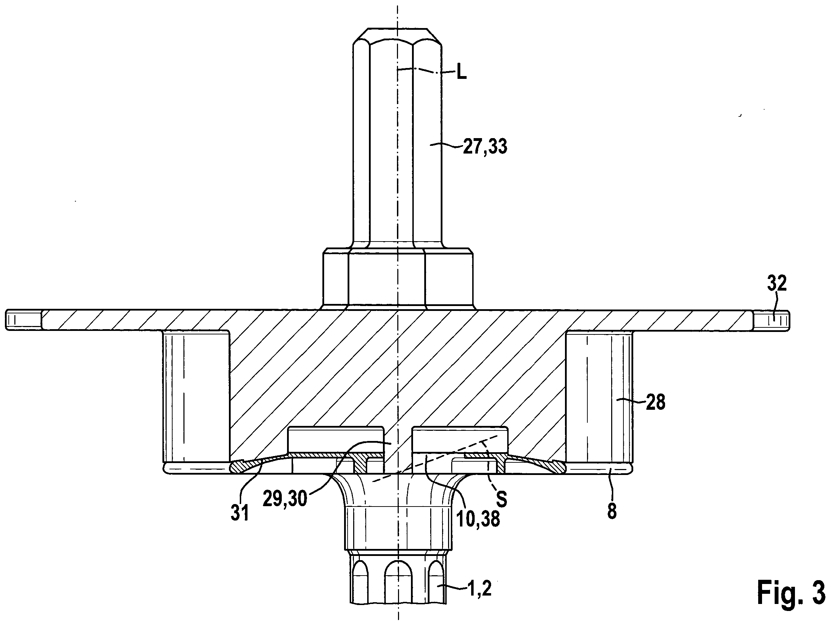

Zur Erstellung der Befestigungsanordnung 24 wird zunächst ein Bohrloch 35 durch den Dämmstoff 25 hindurch in den Untergrund 26 erstellt. In das Bohrloch 35 wird der Dübel 1 gesteckt, bis der Halteteller 8 an einer Außenseite 36 des Dämmstoffs 25 zur Anlage kommt. Der Spreizabschnitt 5 des Dübels 1 ist dabei im Bereich des Untergrunds 26 angeordnet. Vor oder nach dem Einstecken des Dübels 1 wird das Setzwerkzeug 27 mit dem Schraubbit 34 auf die Schraube 13 aufgesteckt, wozu diese eine sternförmige Werkzeugaufnahme 37 an ihrem hinteren Ende aufweist (siehe Figur 1). Durch Drehung des Setzwerkzeugs 27 wird die Schraube 13 in die Dübelhülse 2 eingetrieben und verspreizt den Spreizabschnitt 5, wodurch der Dübel 1 Halt im Untergrund 26 erhält. Das Eintreiben erfolgt in einem ersten Schritt bis zu dem in Figur 2b dargestellten Zustand, es wird also nur die Schraube 13 gedreht. Bei dem in Figur 2b dargestellten Übergang zum zweiten Schritt setzt einerseits der zweite Kragen 21 der Schraube 13 auf der Dübelhülse 2 auf, und es greifen andererseits die Zapfen 29 formschlüssig in die Ausnehmungen 10 des Haltetellers 8 ein. Beides muss nicht zwingend genau gleichzeitig erfolgen, sondern kann auch in einer längeren Übergangszeit nacheinander geschehen. Auch braucht die Drehbewegung nicht gestoppt werden, sondern der Bediener kann das Setzwerkzeug 27 kontinuierlich bis zum Abschluss des Setzvorgangs (Figur 2c) weiter drehen lassen. Das formschlüssige Eingreifen ist in Figur 3 im Detail dargestellt, da hier ein Schnitt durch einen der Zapfen 29 und die korrespondierende Ausnehmung 10 gezeigt ist. Die Ausnehmung 10 ist als eine in Umfangsrichtung verlaufende Nut 38 (siehe Figuren 1 und 3) ausgebildet, die den Halteteller 8 axial durchsetzt. Da der Zapfen 29 zylindrisch ist, hat er innerhalb der Nut 38 Spiel in Umfangsrichtung. Dies ermöglicht, dass der Zapfen 29 entlang einer schraubenlinienförmigen Relativbewegung in die Nut 38 eingreifen kann, also insbesondere durch die beim Einschrauben der Schraube 13 bestehende Kombination aus translatorischer Bewegung in Achsrichtung und Rotation um die Längsachse L des Setzwerkzeugs 27. Die Relativbewegung ist durch die Schraubenlinie S angedeutet dargestellt. Beim Übergang vom ersten zum zweiten Schritt kann es vorkommen, dass der Zapfen 29 nicht exakt der Schraubenlinie S folgt, sondern beispielsweise zunächst zwischen zwei Nuten 38 aufsetzt. Dies führt jedoch lediglich dazu, dass der Zapfen 29 zunächst auf dem Halteteller 8 entlang gleitet und ihn dabei etwas in den Dämmstoff 25 drückt, um dann in die in Drehrichtung nächste Nut 38 einzugreifen. Auch bei relativ hoher Drehzahl kann es dabei durch die Länge der Nut 38 jedoch nicht dazu kommen, dass diese Nut 38 übersprungen wird. Somit gewährleistet die Kombination aus zylindrischem Zapfen 29 und in Umfangsrichtung verlaufender Nut 38 ein besonders zuverlässiges formschlüssiges Eingreifen mittels einer schraublinienförmigen Relativbewegung.

Durch weiteres Drehen des Setzwerkzeugs 27 wird im zweiten Schritt des Setzverfahrens sowohl die Schraube 13 als auch der Halteteller 8 gedreht. Da der zweite Kragen 21 der Schraube 13 wie beschrieben auf der Dübelhülse 2 aufliegt, erzeugt die weitere Drehbewegung axiale Schubkräfte innerhalb der Dübelhülse 2, die zum plastischen Stauchen der Verkürzungszone 22 führen. Durch den axialen Halt des Haltetellers 8 an der Dübelhülse 2 wird der Halteteller 8 drehend in den Dämmstoff 25 gezogen, wobei er gleichzeitig an seinem äußeren Umfang axial durch den Rand 31 gestützt wird. Der Halteteller 8 wird soweit in den Dämmstoff 25 versenkt, bis der Anschlagsteller 32 des Setzwerkzeugs 27 auf der Außenseite 36 des Dämmstoffs 25 aufsitzt, wie dies in Figur 2c dargestellt ist. Abschließend wird das Setzwerkzeug 27 abgenommen und die im Dämmstoff 25 entstandene Vertiefung 39 kann mit einer Dämmstoffrondelle (nicht dargestellt) geschlossen werden.

Das beschriebene Setzverfahren mit dem Dübel 1 und dem Setzwerkzeug 27 ermöglicht einerseits eine platzsparende Verpackung des Dübels 1 und andererseits ein zuverlässiges, schnelles Setzen.

### Bezugszeichenliste

- 1: Dübel
- 2: Dübelhülse
- 3: Kanal
- 4: Schaftabschnitt
- 5: Spreizabschnitt
- 6: Kerbe
- 7: erster Kragen an der Dübelhülse 2
- 8: Halteteller
- 9: Scheibe
- 10: Ausnehmung des Haltetellers 8
- 11: Fortsatz
- 12: Rastverbindung
- 13: Schraube
- 14: Metallstift
- 15: Gewinde
- 16: gewindeloser Abschnitt der Schraube 13
- 17: Kopfabschnitt des Metallstifts 14
- 18: Kopf der Schraube 13
- 19: erster Wulst an der Schraube 13
- 20: zweiter Wulst an der Dübelhülse 2
- 21: zweiter Kragen an der Schraube 13
- 22: Verkürzungszone
- 23: Schwächung
- 24: Befestigungsanordnung
- 25: Dämmstoff
- 26: Untergrund
- 27: Setzwerkzeug
- 28: Grundkörper
- 29: Zapfen
- 30: Vorsprung
- 31: Rand
- 32: Anschlagsteller
- 33: Schaft
- 34: Schraubbit
- 35: Bohrloch
- 36: Außenseite des Dämmstoffs 25
- 37: Werkzeugaufnahme der Schraube 13
- 38: Nut
- 39: Vertiefung im Dämmstoff 25
- E: Einbringrichtung
- L: Längsachse des Setzwerkezeugs
- S: Schraubenlinie

## Patentansprüche

1. Setzverfahren zum Befestigen eines Dämmstoffs (25) an einem Untergrund (26), mit einem Dübel (1) mit einer Schraube (13) als Spreizelement, einer Dübelhülse (2) und einem Halteteller (8),
- wobei die Schraube (13) von einem Setzwerkzeug (27) drehend in die Dübelhülse (2) eingetrieben wird, und beim Eintreiben der Schraube (13) in die Dübelhülse (2) diese axial verkürzt wird, und
dabei in einem ersten Schritt nur die Schraube (13) und dann in einem zweiten Schritt Schraube (13) und Halteteller (8) gemeinsam gedreht werden,
wobei die Dübelhülse (2) einen Kanal (3) zur Aufnahme der Schraube (13), einen Spreizabschnitt (5) und einen Schaftabschnitt (4) aufweist, und wobei der Kanal (3) im Spreizabschnitt (5) gegenüber dem Schaftabschnitt (4) derart verengt ist, dass der Spreizabschnitt (5) durch Eintreiben der Schraube (13) aufgespreizt wird, und wobei der Halteteller (8) drehbar gegenüber dem Spreizabschnitt (5) und axialfest und drehbar mit der Dübelhülse (2) verbunden ist,
**dadurch gekennzeichnet,**
**dass** die Dübelhülse (2) im Schaftabschnitt (4) eine Verkürzungszone (22) aufweist, derart, dass sie durch Anziehen der Schraube (13) beim Verankern des Dübels (1) im Untergrund (26) axial verkürzt und plastisch gestaucht wird.

2. Setzverfahren nach Anspruch 1, **dadurch gekennzeichnet, dass** der Schaftabschnitt (4) eine lokale Schwächung (23) zur Ausbildung der Verkürzungszone (22) aufweist.

3. Setzverfahren nach Anspruch 1 oder 2, **dadurch gekennzeichnet, dass** die Verkürzungszone (22) in einem an den Spreizabschnitt (5) angrenzenden Bereich des Schaftabschnitts (4) angeordnet ist.

4. Setzverfahren nach einem der vorstehenden Ansprüche, **dadurch gekennzeichnet, dass** die Dübelhülse (2) sich über die gesamte Länge des Dübels (1) erstreckt.

5. Setzverfahren nach Anspruch 4, **dadurch gekennzeichnet, dass** der Halteteller (8) eine flache, kreisrunde Scheibe (9) ist und einen nach vorne ragenden, kurzen hülsenartigen Fortsatz (11) zur drehbaren Lagerung des Haltetellers (8) auf der Dübelhülse (2) aufweist.

6. Setzverfahren nach Anspruch 5, **dadurch gekennzeichnet, dass** der Halteteller (8) an der Dübelhülse (2) axialfest gegen eine Verschiebung nach hinten durch einen Kragen (7) der Dübelhülse (2) und gegen eine Verschiebung nach vorne lediglich durch eine Rastverbindung (12) in Form einer umlaufenden Nut und eines umlaufenden Wulsts gehalten wird.

7. Setzverfahren nach einem der vorstehenden Ansprüche, **dadurch gekennzeichnet, dass** das Verhältnis von Gewindesteigung zu Gewindeaußendurchmesser maximal 0,4, insbesondere maximal 0,3, beträgt.

8. Setzverfahren nach einem der vorstehenden Ansprüche, **dadurch gekennzeichnet, dass** beim Setzen des Dübels (1) sowohl die Verkürzungszone (22) als auch der Dämmstoff gestaucht wird.

## Claims

1. Setting method for fixing an insulating material (25) to a substrate (26), having a fixing plug (1) with a screw (13) as expander element, a fixing plug sleeve (2) and a holding plate (8),
- wherein the screw (13) is driven rotationally into the fixing plug sleeve (2) by a setting tool (27), and as the screw (13) is driven into the fixing plug sleeve (2) the latter is axially shortened, and
in a first step only the screw (13) is rotated and then in a second step the screw (13) and the holding plate (8) are rotated together,
wherein the fixing plug sleeve (2) has a channel (3) for receiving the screw (13), an expansion portion (5) and a shank portion (4), and wherein the channel (3) in the expansion portion (5) is narrowed relative to the shank portion (4) in such a way that the expansion portion (5) is expanded by driving in the screw (13), and wherein the holding plate (8) is rotatable relative to the expansion portion (5) and axially fixedly and rotatably connected to the fixing plug sleeve (2),
**characterised in that**
the fixing plug sleeve (2) has in the shank portion (4) a shortening zone (22) such that it is axially shortened and plastically compressed by tightening of the screw (13) during anchoring of the fixing plug (1) in the substrate (26).

2. Setting method according to claim 1, **characterised in that** the shank portion (4) has a local weakened position (23) for forming the shortening zone (22).

3. Setting method according to claim 1 or 2, **characterised in that** the shortening zone (22) is arranged in a region of the shank portion (4) adjacent to the expansion portion (5).

4. Setting method according to any one of the preceding claims, **characterised in that** the fixing plug sleeve (2) extends over the entire length of the fixing plug (1).

5. Setting method according to claim 4, **characterised in that** the holding plate (8) is a flat, circular disc (9) and has a forwardly projecting, short sleeve-like extension (11) for rotatable mounting of the holding plate (8) on the fixing plug sleeve (2).

6. Setting method according to claim 5, **characterised in that** the holding plate (8) is held on the fixing plug sleeve (2) axially fixed against rearward displacement by a collar (7) of the fixing plug sleeve (2) and against forward displacement solely by a snap connection (12) in the form of a circumferential groove and a circumferential bead.

7. Setting method according to any one of the preceding claims, **characterised in that** the ratio of thread pitch to thread external diameter is a maximum of 0.4, especially a maximum of 0.3.

8. Setting method according to any one of the preceding claims, **characterised in that** during setting of the fixing plug (1) both the shortening zone (22) and the insulating material are compressed.

## Revendications

1. Procédé de pose destiné à la fixation d'un matériau isolant (25) sur un substrat (26), à l'aide d'une cheville (1) pourvue d'une vis (13) comme élément d'expansion, d'une douille de cheville (2) et d'une plaque de retenue (8),
- la vis (13) étant entraînée en rotation dans la douille de cheville (2) par un outil de pose (27), et lorsque la vis (13) est entraînée dans la douille de cheville (2), celle-ci étant raccourcie axialement et dans une première étape, seule la vis (13) étant mise en rotation puis, dans une deuxième étape, la vis (13) et la plaque de retenue (8) étant mises en rotation conjointement,
la douille de cheville (2) comportant un canal (3) destiné à recevoir la vis (13), une portion extensible (5) et une portion de tige (4), et le canal (3) étant rétréci dans la portion extensible (5) par rapport à la portion de tige (4) de manière à ce que la portion extensible (5) soit élargie par l'entraînement de la vis (13), et la plaque de retenue (8) étant reliée de manière rotative par rapport à la portion extensible (5) et de manière axialement fixe et rotative à la douille de cheville (2),
**caractérisé en ce que**
la douille de cheville (2) comporte dans la portion de tige (4) une zone de raccourcissement (22) de manière à être raccourcie axialement et comprimée plastiquement par vissage de la vis (13) lorsque la cheville (1) est ancrée dans le substrat (26).

2. Procédé de pose selon la revendication 1, **caractérisé en ce que** la portion de tige (4) comporte un affaiblissement local (23) destiné à former la zone de raccourcissement (22).

3. Procédé de pose selon la revendication 1 ou 2, **caractérisé en ce que** la zone de raccourcissement (22) est disposée dans une région de la portion de tige (4) qui est adjacente à la portion extensible (5).

4. Procédé de pose selon l'une des revendications précédentes, **caractérisé en ce que** la douille de cheville (2) s'étend sur toute la longueur de la cheville (1).

5. Procédé de pose selon la revendication 4, **caractérisé en ce que** la plaque de retenue (8) est un disque plat et circulaire (9) et comprend une extension courte (11) en forme de manchon qui fait saillie vers l'avant et qui est destinée au montage rotatif de la plaque de retenue (8) sur la douille de cheville (2).

6. Procédé de pose selon la revendication 5, **caractérisé en ce que** la plaque de retenue (8) est maintenue sur la douille de cheville (2) de manière fixe axialement par une collerette (7) de la douille de cheville (2) afin de l'empêcher de coulisser vers l'arrière et uniquement par une liaison par encliquetage (12), se présentant sous la forme d'une rainure circonférentielle et d'un bourrelet circonférentiel, afin de l'empêcher de coulisser vers l'avant.

7. Procédé de pose selon l'une des revendications précédentes, **caractérisé en ce que** le rapport du pas de filetage au diamètre de filetage extérieur est au maximum de 0,4, en particulier au maximum de 0,3.

8. Procédé de pose selon l'une des revendications précédentes, **caractérisé en ce que** la zone de raccourcissement (22) et le matériau isolant sont tous les deux comprimés lors de la pose de la cheville (1).
